# EUROPEAN PATENT SPECIFICATION

(11) **EP 2 657 820 B1**
(45) Date of publication and mention of the grant of the patent: **17.07.2019**
(21) Application number: 12165611.0
(22) Date of filing: 26.04.2012
(51) Int. Cl.: G06F 3/0482, G06F 3/038, G06F 3/0488, G06F 3/0354

(54) **Method and apparatus for drawing tool selection**
Verfahren und Vorrichtung zur Auswahl eines Zeichnenwerkzeugs
Procédé et appareil pour sélection d'un outil de dessin

(43) Date of publication of application: 30.10.2013
(73) Proprietor: BlackBerry Limited, Waterloo, ON N2K 0A7 (CA)
(72) Inventor: Mesaros, Mark David, Waterlo Ontario N2L 3W8 (CA); Mulaosmanovic, Jasmin, Waterloo Ontario N2L 3W8 (CA)
(74) Representative: Noble, Nicholas

(56) References cited:
- WO-A2-2004/063862
- JP-A- 61 237 123
- US-A1- 2004 246 240
- US-A1- 2007 094 328
- US-A1- 2011 007 037
- US-A1- 2011 043 492
- Adobe: "Using ADOBE PHOTOSHOP CS5", , 1 January 2011 (2011-01-01), XP055320718, Retrieved from the Internet: URL:http://help.adobe.com/en_US/photoshop/ cs/using/photoshop_cs5_help.pdf [retrieved on 2016-11-17]

## Description

### BACKGROUND

Stylus pointing devices are used to convey position information to an electronic device. However, unlike a computer mouse that conveys relative motion, a stylus is designed to convey the absolute position of the stylus on a surface such as a tablet or screen. The position may be determined by a variety of methods, including detecting the interaction of the stylus with the electrical properties of the tablet (electromagnetic induction, electrical resistance, electrical capacitance), the optical properties of the tablet, or by ultrasonic location.

An active stylus has an ability to communicate with the electronic device over a wired link or over a wireless communication link, such as a RadioFrequency (RF) or Infrared (IR) link.

A stylus may be used in conjunction with a graphical user interface to enable user input to the electronic device.

A common use of a stylus is to provide user input to a computer aided drawing or handwriting application. In this application the stylus is used both to draw lines and to interact with a user interface. Selection of the properties of the line is achieved by using the stylus to interact with a graphical user interface. For example, the color or thickness of a line to be drawn may be selected by touching ('clicking') the stylus to a particular region of the screen or tablet. Alternatively, the color or thickness or a line may be selected by using the stylus to move a screen cursor to a particular region of the screen. A similar approach is used to select other properties of the line to be drawn.

It would be useful to provide a faster and more intuitive method for selecting line properties or other parameters. One approach is to provide one or more buttons on the body on the stylus and to assign each button to a particular color. However, there are a great number of colors available and many other line properties that may be selected. This approach is limited since it is only practical to have a relatively small number of buttons on a stylus.

US 2011/007037 details an electronic pen electronically drawing lines on a terminal apparatus comprises a display, a gap, and a conductive member. The display displays a property of the electronic pen, and is a piece of electronic paper and extending around an external periphery of the electronic pen. The gap is provided between both opposing ends of the display. The conductive member is positioned in the gap and is connected to the display to supply signals to the display.

### SUMMARY OF THE INVENTION

The scope of the present invention is defined by the appended claims.

### BRIEF DESCRIPTION OF THE DRAWINGS

Example embodiments of the present disclosure will be described below with reference to the included drawings such that like reference numerals refer to like elements and in which:
**FIG. 1A** is a diagram of a stylus and host electronic device, in accordance with various example embodiments of the present disclosure.
**FIG. 1B** is a diagram of a circuit of a host electronic device, in accordance with various example embodiments of the present disclosure.
**FIG. 2** is a diagram of an example of a user interface displayed on a display screen of a host electronic device, in accordance with various example embodiments of the present disclosure.
**FIG. 3** is a diagram of an example of drawing tool selection using a stylus, in accordance with various example embodiments of the present disclosure.
**FIG. 4** is a diagram of a further example of a user interface displayed on a display screen of a host electronic device, in accordance with various example embodiments of the present disclosure.
**FIG. 5** is a flow chart of a method for selecting a description of a computer drawing tool, in accordance with various example embodiments of the present disclosure.
**FIG. 6** is a flow chart of a further method for selecting a description of a computer drawing tool, in accordance with various example embodiments of the present disclosure.

### DETAILED DESCRIPTION

The present disclosure provides a method, system and stylus for selecting the attributes of a computerized drawing tool on a host electronic device. In one embodiment, the attributes are selected by first selecting a plurality of attributes on a user interface of the host electronic device. The attributes, in combination, define one or more first settings of the computerized drawing tool. Responsive to a first signal received by the host electronic device from a stylus, the host electronic device cycles through the one or more first settings of the computerized drawing tool to select a setting of the one or more first settings.

When a selected drawing tool setting includes color, the host electronic device may signal the selected color to the stylus for display using a color indicator, such as an LED, on the stylus.

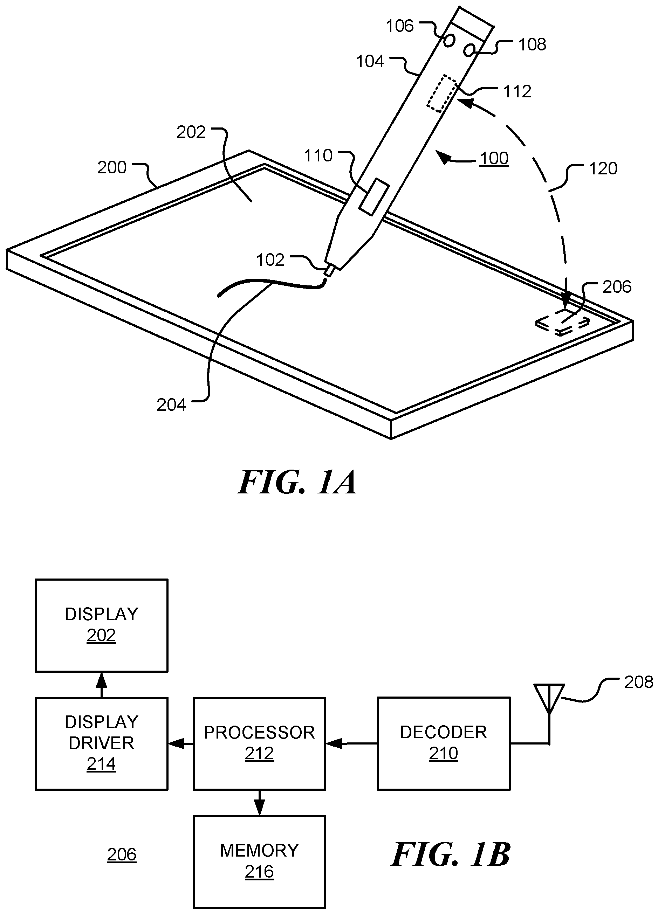

**FIG. 1A** is a diagram of a stylus 100 and host electronic device 200, in accordance with various example embodiments of the present disclosure. Referring to **FIG.1A**, the stylus 100 is operable to interact with the host electronic device 200. In operation, the position of the stylus tip element 102, which extends from the elongated housing 104 of the stylus 100, relative to the surface of the host electronic device is detected and may be used to control the electronic device. For example, the stylus may be an active stylus that emits a signal that is detected by sensors in the electronic device 200. Alternatively, the stylus may detect signals emitted from sources in the electronic device. The signals may be, for example, electromagnetic, acoustic, optical, or a combination thereof. Various position detection methods are known, or will be apparent, to those of ordinary skill the art.

The stylus 100 may have one or more controls such as button 106 and button 108, a color indicator 110 and a communication unit 112. The color indicator 110 may be an illumination source, such as a light emitting diode (LED), for example, or other kind of indicator. In operation, user activation of a control (106 or 108) causes a selection signal 120 to be transmitted from the communication unit 112.

In one embodiment, the upper surface 202 of the electronic device comprises a visual display screen. An image 204 may be displayed on the visual display screen 202 dependent upon the position of the tip element 102. The image 204 may be, for example, a line showing the current and prior positions of the tip element, or a cursor showing the current position of the tip element.

The host electronic device 200 may be, for example, a drawing tablet computer, a laptop computer, a drawing table, a computer screen, a PDA, a mobile telephone, a gaming device, an electronic reader, a television screen, or other electronic device. The host electronic device 200 incorporates a circuit 206.

**FIG. 1B** is a block diagram of the circuit of a host electronic device, in accordance with various example embodiments of the present disclosure. Referring to **FIG. 1B**, the circuit 206 includes an antenna 208 for wireless communication with a stylus, and a decoder 210 for decoding signals received at the antenna 208. The decoded signals are input to a processor 212 and are used to control operation of an application executing on the processor. The output from the processor, which may be an electronic drawing, for example, is passed to a display driver 214, which drives the display screen 202. The output from the controller may also be stored in a memory 216. Auxiliary components, such as clocks and a power source, have been omitted for simplicity. These components are well known to those of ordinary skill in the art.

Referring again to **FIG. 1A**, in a further embodiment, the host electronic device 200 comprises a position detection device that receives or transmits signals from the stylus 100, or both receives and transmits signals. These signals may be used to locate the position of the stylus using properties of the signals, such as time-difference of arrival, direction of arrival or amplitude at a detector array, for example. Such position detection systems are known to those of ordinary skill in the art. The position detection device may be linked to a computer or other electronic device.

In some embodiments, the position of the tip element 102 provides an input to a computer program executing on the processor 206 of the electronic device 200, or on a processor operatively coupled to the electronic device 200. A common use for a stylus is for control of a drawing tool in a computer aided drawing system. In such applications, the stylus replicates drawing tools such as pens and brushes commonly used for drawing. Since the stylus may be used for different tools, a user is provided with methods for selecting different tools and for selecting the attributes of the drawing tools. Examples of drawing tool attributes include line width and color, while brush tool attributes additionally include opacity, grain, angle, jitter, re-saturation, bleed, flow, and depth. These attributes are typically selected by user interaction with a graphical user interface displayed on the visual display screen. A full description of a drawing tool includes a plurality of attributes. The combination of drawing tool attributes defines the setting of the drawing.

Commonly, a computerized drawing tool, such a pen, brush, chalk, spray, etc., has a large number of potential attributes. For example, if each red, green and blue color component is represented by an 8-bit value, there are 2²⁴ possible colors. In addition, other attributes such as tool type, line width, saturation, opacity etc. may be selected. It is therefore impractical to have a control for each set of attributes, let alone each attribute within the set.

In one embodiment, the one or more controls are used to select drawing tool settings from a list of one or more settings. The list may be ordered and may be accessed cyclically. That is, each time a control is activated, a new description is selected from the list of descriptions. A list of descriptions may be accessed in a cyclic manner.

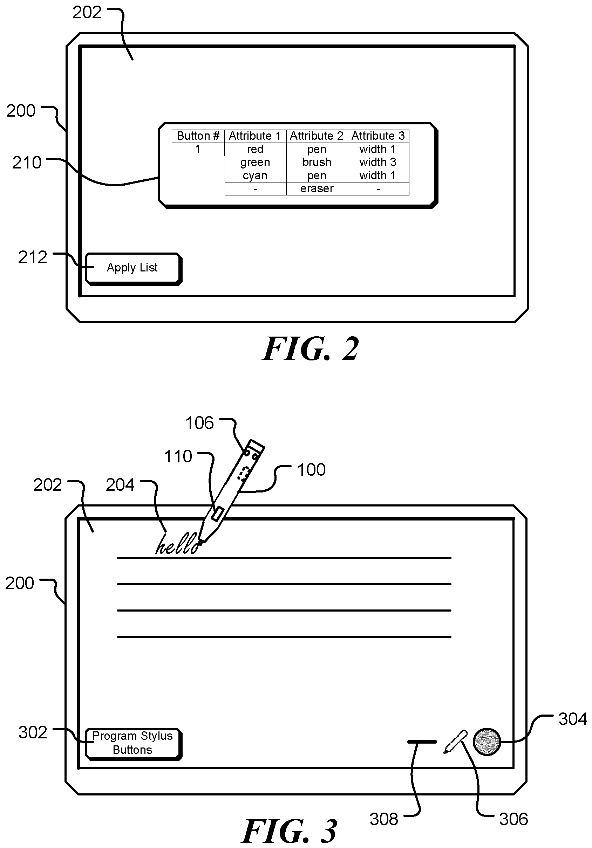

In one embodiment, the host electronic device 200 includes a user interface. For example, the user interface may comprise the display screen 202 and an input device. The input device may be, for example, the stylus 100, computer mouse, a keyboard, or a voice interface. Alternatively, the display screen may be a touch screen, such as a capacitive or restive screen. **FIG. 2** shows an example of a user interface 210 displayed on a display screen 202 of a host electronic device 200 while operating in a first mode of operation. In the embodiment shown in **FIG. 2**, the user interface 210 is a data entry form that enables a user to (i) select the button on the stylus to be programmed, (ii) set an ordered list of descriptions. In user interface 210, each row of the table corresponds to a drawing tool setting and each column element in a row corresponds to an attribute. Thus, the first setting is for a red pen with line width 1 unit.

The user interface may take other forms known to those of ordinary skill in the art, such as drop down menus. Attributes may be entered using text, selecting from a list, or dragging from a palette, for example.

Attributes may be entered in a variety of methods. For example, numerical values for color components or line widths may be entered by typing numbers in a form or by using increment/decrement controls. Attributes may also be entered by entering text, selecting from lists, or selecting from palettes. Other methods for entering attributes will be apparent those of ordinary skill in the art.

When the list of settings is complete, the user can select button 212 on the display screen to store the settings and move to a second mode of operation. An embodiment of the second mode of operation is shown in **FIG. 3**. Referring to **FIG. 3**, the attributes of the currently selected drawing tool, such as the color 304, tool type 306 and line width 308, are displayed on the display screen 202. Movement of the stylus 100 results in a line 204, with the selected attributes, being displayed on the display screen 202.

To move to the next setting, the user activates control 106 on the stylus which causes a first selection signal to be transmitted from the stylus. When the first selection signal from the stylus is received by the host electronic device it selects, as a primary drawing tool setting, the next drawing tool setting from the first list of drawing tool settings. The one or more drawing tool attributes in the selected primary drawing tool setting are then assigned to the computer drawing tool and may be displayed on the display screen 202. Each time a first selection signal is received, the next setting is selected from the list.

In one embodiment, the list of settings is a cyclic ordered list. Settings in the list are accessed in order and once the last setting list is reached, the next setting is taken to be the first setting in the list.

In this manner, a single control, such as a button 106 on the stylus 100, may be used to select from a list of drawing tool settings. Each setting may comprise one or more attributes. Further, as described above, the list of settings may be customized by user interaction with the user interface. For example, this enables a user to select a palette of colors to be used and the user may move from one palette color to the next by pressing a button on the stylus. As a further example, a user may select, in turn, a red brush, a green brush, a black pen or an eraser by pressing a single button on the stylus.

Thus, in the first mode of operation of this embodiment, a user interface is displayed on a display of the host electronic device to a user of the computer drawing tool and a first list of settings is formed dependent upon user interaction with the user interface. The first list of settings is stored in a memory on the host electronic device or a memory on the stylus, or both. An initial setting is selected from the first list of settings. This may be, for example, the first setting in the list. In a second mode of operation, a first input from the computer drawing tool is received at the host electronic device, the first input being dependent upon user interaction with a first control of the computer drawing tool. Upon receipt of the first input from the computer drawing tool, the next setting in the first list is selected.

In an embodiment where an attribute includes the color of the drawing tool, the selected color may be communicated from the host electronic device to the stylus and displayed on a color indicator 110 of the stylus, so as to indicate to the user which color has been selected.

If a user wishes to change the list of settings, the host electronic device may be returned to the first mode of operation. This may be done, for example, by activating a button 302 displayed on the user interface 202.

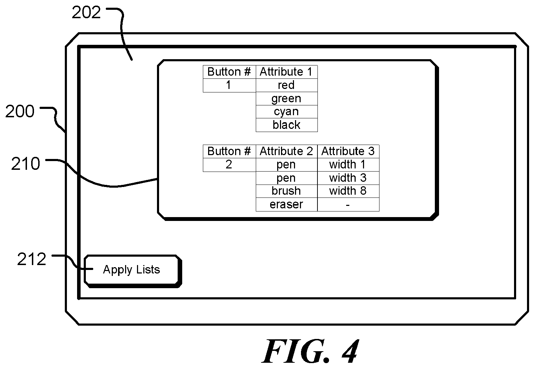

**FIG. 4** shows a further embodiment in which the stylus has two or more controls (such as 106 and 108 in **FIG. 1**). In this embodiment, each control or button controls an associated list of drawing tool settings. That is, the first control selects from a first list of settings and the second control selects from a second list of settings. In the example shown, button 1 controls the color of the drawing tool. The ordered list of colors may be set by user interaction with the user interface 210. Button 2 controls two further attributes, the tool type and the line width. In general, any number of buttons may be used and each list may contain one or more attributes. The full setting of the drawing tool is obtained by combining attributes from the selected settings in each list. For example if button 1 has been used to select 'green', and button 2 has been used to select 'brush width, 8', then the drawing tool is assigned the attributes 'green brush with width 8 units'.

The setting selected from the second list may be combined with the setting selected from the first list to form an augmented setting of the computer drawing tool.

When the first control is activated a first signal is transmitted from the stylus. When the second control is activated a second signal is transmitted from the stylus. The first and second signals are different from one another so that the host electronic device can determine which control has been activated and select a drawing tool setting from the appropriate list of settings. Similarly, when more than two controls are present, each selection signal is distinguishable from the others.

It will be apparent to those of ordinary skill in the art that any attributes may be assigned to the settings, and such attributes are not limited to those attributes described herein.

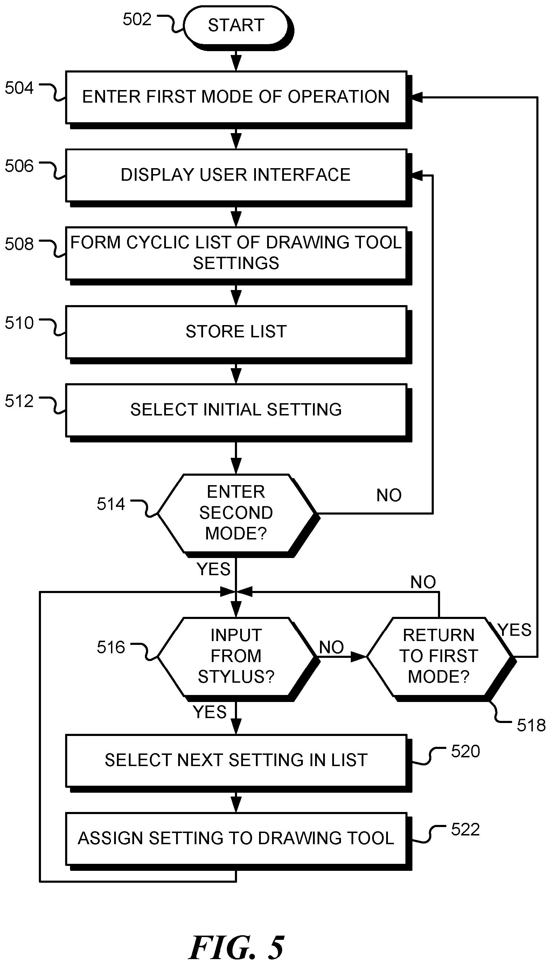

**FIG. 5** is a flow chart of a method for selecting a setting of a computer drawing tool. Following start block 502 in **FIG. 5**, a host electronic device enters in a first mode of operation at block 504. At block 506 a user interface is displayed to a user of the computer drawing tool. At block 508, a first list of settings is formed dependent upon user interaction with the user interface. The first list of settings is stored at block 510 and at block 512 an initial setting is selected from the first list of settings.

If the user selects to move to a second mode of operation, as depicted by the positive branch form decision block 514, flow continues to decision block 516; otherwise, as depicted by the negative branch from decision block 514, flow returns to block 506 to allow the user to continue to make changes to the list of settings.

In a second mode of operation the host electronic device is responsive to input signals received from user activation of the one or more controls on the stylus. If no input from the stylus is received, as depicted by the negative branch from decision block 516, a check is made at decision block 518 to determine if the user has requested to return to the first operating mode. If so, as depicted by the positive branch from decision block 518, flow returns to block 504. If not, flow returns to decision block 516 to await either stylus input or a request to return to the first operating mode.

If stylus input is received at the host electronic device, as depicted by the positive branch from decision block 516, the next setting in the first list is selected at block 520. The attributes in the selected setting are then assigned to the drawing tool at block 522. The host electronic devices responds dependent upon the position of the stylus and on the setting of the drawing tool. Flow then returns to block 516 to await further user input from the stylus or from the user interface.

As disclosed above, the first control of the computer drawing tool may be a button on the computer drawing tool, or some other control.

A setting in the first list of settings comprises one or more attributes such as color, line width and drawing tool type. Other attributes may be programmed.

The attributes of the selected setting may be displayed on the user interface.

In an embodiment where one of the attributes is color, the selected color may be communicated from the host electronic device to the computer drawing tool and displayed using a color indicator, such as a light emitting diode (LED) for example, of the computer drawing tool.

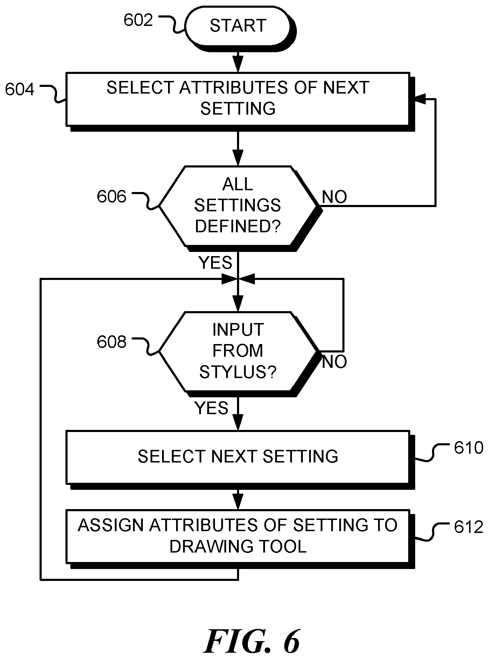

**FIG. 6** is a flow chart of a further method for selecting a setting of a computer drawing tool. Following start block 602 in **FIG. 6**, a setting of the computerized drawing tool is selected on a user interface of the host electronic device at block 604. Each setting is defined by a combination of two or more user-selectable attributes. For example, a first setting may be defined by the attributes 'red', 'pen' and 'width 2'. If another setting is to be defined, as depicted by the negative branch from decision block 606, flow returns to block 604 and the next setting is defined. For example, a second setting may be defined by the attributes 'green', 'brush', and 'width 4'. Once all of the one or more settings have been defined, as depicted by the positive branch from decision block 606, flow continues to decision block 608. If an input is received from a stylus, as depicted by the positive branch from decision block 608, the next setting of the one or more settings is selected at block 610, and the attributes of the setting are assigned to the computerized drawing tool at block 612. Flow then returns to decision block 608. The input may be generated by a user activating a control, such as a button, on the stylus. In this manner, each setting of the computerized drawing tool comprises two more user-or more selectable attributes.

The implementations of the present disclosure described above are intended to be examples only. Those of skill in the art can effect alterations, modifications and variations to the particular example embodiments herein without departing from the intended scope of the present disclosure. Moreover, selected features from one or more of the above-described example embodiments can be combined to create alternative example embodiments not explicitly described herein.

Operation of the host electronic device or the stylus may be controlled by a processor, such as a programmed processor executing a program of instructions, an application specific integrated circuit (ASIC), or a field programmable gate array (FPGA), for example.

It will be appreciated that any module or component disclosed herein that executes instructions may include or otherwise have access to non-transient and tangible computer readable media such as storage media, computer storage media, or data storage devices (removable or non-removable) such as, for example, magnetic disks, optical disks, or tape data storage. Computer storage media may include volatile and non-volatile, removable and non-removable media implemented in any method or technology for storage of information, such as computer readable instructions, data structures, program modules, or other data. Examples of computer storage media include RAM, ROM, EEPROM, flash memory or other memory technology, CD-ROM, digital versatile disks (DVD) or other optical storage, magnetic cassettes, magnetic tape, magnetic disk storage or other magnetic storage devices, or any other medium which can be used to store the desired information and which can be accessed by an application, module, or both. Any such computer storage media may be part of the host electronic device or stylus. Any application or module herein described may be implemented using computer readable/executable instructions that may be stored or otherwise held by such computer readable media.

## Claims

1. A method for selecting attributes of a computerized drawing tool in a computer aided drawing system on a host electronic device (200), comprising:
forming a plurality of first settings in response to inputs from a graphical user interface of the host electronic device, each first setting comprising a plurality of user-selected first attributes (200) of the computerized drawing tool, wherein the user selected first attributes are selected from a group of attributes comprising color, line width, a drawing tool type, opacity, grain, angle, jitter, saturation, bleed, flow, and depth;
storing the first settings in a memory of the host electronic device (200); and
receiving a first signal (120) at the host electronic device (200) from a stylus (100), each first signal generated in response to a press of a first button of the stylus;
each time the first signal is received by the host electronic device from the stylus, moving to a next setting of the plurality of first settings of the computerized drawing tool to select a setting of the plurality of first settings, wherein the first settings are accessed cyclically, and assigning the plurality of user-selected drawing tool first attributes for the selected setting to the computerized drawing tool.

2. The method in accordance with claim 1,
further comprising displaying the selected first plurality of attributes (200) that define the selected setting on the graphical user interface.

3. The method in accordance with claim 1 or 2, wherein, when an attribute of the selected setting comprises a color, the method further comprising:
communicating the color of the selected setting to the stylus (100); and displaying the color of the selected setting using a color indicator of the 5 stylus (100).

4. The method in accordance with any of claims 1 to 3, further comprising:
forming a plurality of second settings in response to second inputs from the graphical user interface of the host electronic device, each second setting comprising a plurality of user-selected second attributes of the computerized drawing tool, wherein the user-selectable second attributes are selected from the group of attributes;
storing the second settings in the memory of the host electronic device; and
receiving a second signal at the host electronic device from the stylus, each second signal generated in response to a press of a second button of the stylus;
each time the second signal is received by the host electronic device from the stylus, moving to a next setting of the plurality of second settings of the computerized drawing tool to select a setting of the plurality of second settings, wherein the second settings are accessed cyclically; and
combining attributes of the selected setting of the plurality of first settings and attributes of the selected setting of the plurality of second settings to define settings of the computerized drawing tool.

5. The method in accordance with any of claims 1 to 3, further comprising at least one of:
displaying a line on the graphical user interface of the host electronic device dependent upon the position of the stylus (100) and the selected first setting of the computer drawing tool; and
transmitting the first settings to the stylus (100) and storing the first settings in a memory of the stylus (100).

6. A computer-readable medium carrying computer readable instructions arranged, when executed by a processor, to cause an electronic device (200) to carry out the method of any of claims 1 to 5.

7. A computer drawing system configured to enable selecting attributes of a computerized drawing tool, the system comprising a stylus and a host electronic device; wherein the host electronic device comprises:
a display screen comprising a graphical user interface;
a processor configured to form a plurality of first settings in response to inputs from the graphical user interface, each first setting comprising a plurality of user-selected first attributes of the computerized drawing tool, wherein the user-selectable first attributes are selected from a group of attributes comprising color, line width, drawing tool type, opacity, grain, angle, jitter, saturation, bleed, flow, and depth;
a memory storing the first settings;
the processor being further configured to:
receive a first selection signal (120) from a stylus (100), each first selection signal generated in response to a press of a first button of the stylus;
each time the first signal is received by the host electronic device from the stylus, move to a next setting of the plurality of first settings of the computerized drawing tool to select a setting of the plurality of first settings, wherein the first settings are accessed cyclically; and
assign the plurality of user-selected drawing tool first attributes for the selected setting to the computerized drawing tool.

8. The computer drawing system in accordance with claim 7, wherein the processor is further configured to:
display a line on the graphical user interface of the host electronic device dependent upon the position of the stylus and the selected first setting of the computer drawing tool, and optionally,
display on the graphical user interface the selected first setting.

9. The computer drawing system in accordance with claim 7 or 8, wherein the stylus further comprises:
a housing (104);
a drawing tip (102) extending from one end of the housing (104);
a communication unit (112) in the housing (104); and
the first button operable to cause the communication unit (112) to transmit the first selection signal (120) upon activation of the first button.

10. The computer drawing system in accordance with claim 9, wherein the stylus further comprises a color indicator operable to, when an attribute of the selected first setting comprises a color, display the color of the selected first setting,
wherein the host electronic device (200) optionally further comprises a communication unit (208) operable to receive the first selection signal (120) from the stylus (100)
and operable to transmit the color of the selected primary setting to the stylus (100).

11. The computer drawing system in accordance with claim 9, wherein the stylus further comprises:
a second button operable (108) to cause the communication unit (112) to transmit a second selection signal (120) upon activation of the second button (108),
wherein the processor is further arranged to, each time the second selection signal is received by the host electronic device from the stylus,
move to a next setting of a plurality of second settings of the computerized drawing tool to select a setting of the plurality of second settings, wherein the second settings are accessed cyclically, the second settings being formed in response to second inputs from the graphical user interface, each second setting comprising a plurality of user-selectable second attributes selected from the group of attributes, and
combine attributes of the selected setting of the plurality of first settings and attributes of the selected setting of the plurality of second settings to define settings of the computerized drawing tool.

## Patentansprüche

1. Verfahren zur Auswahl von Attributen eines computergestützten Zeichenwerkzeugs in einem computergestützten Zeichensystem auf einer elektronischen Host-Vorrichtung (200), umfassend:
Bilden einer Vielzahl von ersten Einstellungen als Reaktion auf Eingaben von einer grafischen Benutzeroberfläche der elektronischen Host-Vorrichtung, wobei jede erste Einstellung eine Vielzahl von benutzerselektierten ersten Attributen (200) des computergestützten Zeichenwerkzeugs umfasst, wobei die benutzerselektierten ersten Attribute aus einer Gruppe von Attributen ausgewählt sind, die Farbe, Linienbreite, Zeichenwerkzeugtyp, Opazität, Körnung, Winkel, Jitter, Sättigung, Beschnitt, Fluss und Tiefe umfassen;
Speichern der ersten Einstellungen in einem Speicher der elektronischen Host-Vorrichtung (200);
und
Empfangen eines ersten Signals (120) an der elektronischen Host-Vorrichtung (200) von einem Eingabestift (100), wobei jedes erste Signal als Reaktion auf einen Druck einer ersten Taste des Eingabestiftes erzeugt wird;
Verfahren, jedes Mal, wenn das erste Signal von dem Eingabestift durch die elektronischen Host-Vorrichtung empfangen wird, zu einer nächsten Einstellung der Vielzahl von ersten Einstellungen des computergestützten Zeichenwerkzeugs, um eine Einstellung der Vielzahl von ersten Einstellungen auszuwählen, wobei auf die ersten Einstellungen zyklisch zugegriffen wird, und Zuweisen der Vielzahl von benutzerselektierten ersten Attributen des Zeichenwerkzeugs für die ausgewählte Einstellung zu dem computergestützten Zeichenwerkzeug.

2. Verfahren nach Anspruch 1,
ferner umfassend das Anzeigen der ausgewählten ersten Vielzahl von Attributen (200), die die ausgewählte Einstellung auf der grafischen Benutzeroberfläche definieren.

3. Verfahren nach Anspruch 1 oder 2, wobei, wenn ein Attribut der ausgewählten Einstellung eine Farbe umfasst, das Verfahren ferner umfasst:
Übermitteln der Farbe der ausgewählten Einstellung an den Eingabestift (100); und
Anzeigen der Farbe der ausgewählten Einstellung unter Verwendung eines Farbindikators des Eingabestiftes (100).

4. Verfahren nach einem der Ansprüche 1 bis 3, ferner umfassend:
Bilden einer Vielzahl von zweiten Einstellungen als Reaktion auf zweite Eingaben von der grafischen Benutzeroberfläche der elektronischen Host-Vorrichtung, wobei jede zweite Einstellung eine Vielzahl von benutzerselektierten zweiten Attributen des computergestützten Zeichenwerkzeugs umfasst, wobei die benutzerselektierbaren zweiten Attribute aus der Gruppe der Attribute ausgewählt sind;
Speichern der zweiten Einstellungen in dem Speicher der elektronischen Host-Vorrichtung; und
Empfangen eines zweiten Signals an der elektronischen Host-Vorrichtung von dem Eingabestift, wobei jedes zweite Signal als Reaktion auf einen Druck auf eine zweite Taste des Eingabestiftes erzeugt wird;
Verfahren, jedes Mal, wenn das zweite Signal von dem Eingabestift durch die elektronische Host-Vorrichtung empfangen wird, zu einer nächsten Einstellung der Vielzahl von zweiten Einstellungen des computergestützten Zeichenwerkzeugs, um eine Einstellung der Vielzahl von zweiten Einstellungen auszuwählen, wobei auf die zweiten Einstellungen zyklisch zugegriffen wird; und
Kombinieren von Attributen der ausgewählten Einstellung der Vielzahl von ersten Einstellungen und Attributen der ausgewählten Einstellung der Vielzahl von zweiten Einstellungen, um Einstellungen des computergestützten Zeichenwerkzeugs zu definieren.

5. Verfahren nach einem der Ansprüche 1 bis 3, ferner umfassend mindestens eines von:
Anzeigen einer Zeile auf der grafischen Benutzeroberfläche der elektronischen Host-Vorrichtung in Abhängigkeit von der Position des Eingabestiftes (100) und der gewählten ersten Einstellung des Computer-Zeichenwerkzeugs; und
Übermitteln der ersten Einstellungen an den Eingabestift (100) und Speichern der ersten Einstellungen in einem Speicher des Eingabestiftes (100).

6. Computerlesbares Medium mit computerlesbaren Anweisungen, die, wenn sie von einem Prozessor ausgeführt werden, angeordnet sind, um zu bewirken, dass eine elektronische Vorrichtung (200) das Verfahren nach einem der Ansprüche 1 bis 5 ausführt.

7. Computer-Zeichensystem, das dazu konfiguriert ist, das Auswählen von Attributen eines computergestützten Zeichenwerkzeugs zu ermöglichen, wobei das System einen Eingabestift und eine elektronische Host-Vorrichtung umfasst; wobei die elektronische Host-Vorrichtung umfasst:
einen Anzeigebildschirm, der eine grafische Benutzeroberfläche umfasst;
einen Prozessor, der dazu konfiguriert ist, eine Vielzahl von ersten Einstellungen als Reaktion auf Eingaben von der grafischen Benutzeroberfläche zu bilden, wobei jede erste Einstellung eine Vielzahl von benutzerselektierten ersten Attributen des computergestützten Zeichenwerkzeugs umfasst, wobei die benutzerselektierbaren ersten Attribute aus einer Gruppe von Attributen ausgewählt sind, die Farbe, Linienbreite, Zeichenwerkzeugtyp, Opazität, Körnung, Winkel, Jitter, Sättigung, Beschnitt, Fluss und Tiefe umfassen;
einen Speicher, der die ersten Einstellungen speichert;
wobei der Prozessor ferner konfiguriert ist, um:
ein erstes Auswahlsignal (120) von einem Eingabestift (100) zu empfangen, wobei jedes erste Auswahlsignal als Reaktion auf einen Druck einer ersten Taste des Eingabestiftes erzeugt wird;
jedes Mal, wenn das erste Signal durch die elektronische Host-Vorrichtung von dem Eingabestift empfangen wird, zu einer nächsten Einstellung der Vielzahl von ersten Einstellungen des computergestützten Zeichenwerkzeugs zu verfahren, um eine Einstellung der Vielzahl von ersten Einstellungen auszuwählen, wobei auf die ersten Einstellungen zyklisch zugegriffen wird; und
die Vielzahl von benutzerselektierten ersten Attributen des Zeichenwerkzeugs für die ausgewählte Einstellung dem computergestützten Zeichenwerkzeug zuzuweisen.

8. Computer-Zeichensystem nach Anspruch 7, wobei der Prozessor ferner konfiguriert ist, um:
eine Zeile auf der grafischen Benutzeroberfläche der elektronischen Host-Vorrichtung in Abhängigkeit von der Position des Eingabestiftes und der gewählten ersten Einstellung des Computer-Zeichenwerkzeugs anzuzeigen, und optional,
die gewählte erste Einstellung auf der grafischen Benutzeroberfläche anzuzeigen.

9. Computer-Zeichensystem nach Anspruch 7 oder 8, wobei der Eingabestift ferner umfasst:
ein Gehäuse (104);
eine Zeichenspitze (102), die sich von einem Ende des Gehäuses (104) erstreckt;
eine Kommunikationseinheit (112) in dem Gehäuse (104); und
die erste Taste, die betriebsfähig ist, um zu bewirken, dass die Kommunikationseinheit (112) das erste Auswahlsignal (120) beim Betätigen der ersten Taste sendet.

10. Computer-Zeichensystem nach Anspruch 9, wobei der Stift ferner einen Farbindikator umfasst, der betriebsfähig ist, um, wenn ein Attribut der ausgewählten ersten Einstellung eine Farbe umfasst, die Farbe der ausgewählten ersten Einstellung anzuzeigen,
wobei die elektronische Host-Vorrichtung (200) optional ferner eine Kommunikationseinheit (208) umfasst, die betriebsfähig ist, um das erste Auswahlsignal (120) von dem Eingabestift (100) zu empfangen und betriebsfähig ist, die Farbe der ausgewählten primären Einstellung an den Eingabestift (100) zu senden.

11. Computer-Zeichensystem nach Anspruch 9, wobei der Stift ferner umfasst:
eine zweite Taste, die betriebsfähig (108) ist, um zu bewirken, dass die Kommunikationseinheit (112) beim Aktivieren der zweiten Taste (108) ein zweites Auswahlsignal (120) sendet,
wobei der Prozessor ferner angeordnet ist, um jedes Mal, wenn das zweite Auswahlsignal von dem Eingabestift durch die elektronische Host-Vorrichtung empfangen wird,
zu einer nächsten Einstellung einer Vielzahl von zweiten Einstellungen des computergestützten Zeichenwerkzeugs zu verfahren, um eine Einstellung der Vielzahl von zweiten Einstellungen auszuwählen, wobei auf die zweiten Einstellungen zyklisch zugegriffen wird, wobei die zweiten Einstellungen als Reaktion auf zweite Eingaben von der grafischen Benutzeroberfläche gebildet werden, wobei jede zweite Einstellung eine Vielzahl von benutzerselektierbaren zweiten Attributen umfasst, die aus der Gruppe von Attributen ausgewählt sind, und
Attribute der ausgewählten Einstellung der Vielzahl von ersten Einstellungen und Attribute der ausgewählten Einstellung der Vielzahl von zweiten Einstellungen zu kombinieren, um Einstellungen des computergestützten Zeichenwerkzeugs zu definieren.

## Revendications

1. Procédé de sélection d'attributs d'un outil de dessin informatisé dans un système de dessin assisté par ordinateur sur un dispositif électronique hôte (200), comprenant les étapes consistant à :
former une pluralité de premiers paramètres en réponse à des entrées à partir d'une interface utilisateur graphique du dispositif électronique hôte, chaque premier paramètre comprenant une pluralité de premiers attributs (200) sélectionnés par l'utilisateur de l'outil de dessin informatisé, où les premiers attributs sélectionnés par l'utilisateur sont sélectionnés dans un groupe d'attributs comprenant la couleur, la largeur de ligne, un type d'outil de dessin, l'opacité, le grain, l'angle, la gigue, la saturation, le fond perdu, l'écoulement et la profondeur ;
stocker les premiers paramètres dans une mémoire du dispositif électronique hôte (200) ; et
recevoir un premier signal (120) au niveau du dispositif électronique hôte (200) à partir d'un stylet (100), chaque premier signal étant généré en réponse à une pression d'un premier bouton du stylet ;
à chaque fois que le premier signal est reçu par le dispositif électronique hôte à partir du stylet, passer à un paramètre suivant de la pluralité de premiers paramètres de l'outil de dessin informatisé pour sélectionner un paramètre de la pluralité de premiers paramètres, où les premiers paramètres sont accessibles de manière cyclique, et attribuer la pluralité de premiers attributs d'outil de dessin sélectionnés par l'utilisateur pour le paramètre sélectionné à l'outil de dessin informatisé.

2. Procédé selon la revendication 1, comprenant en outre l'étape consistant à afficher la première pluralité d'attributs sélectionnés (200) qui définissent le paramètre sélectionné sur l'interface utilisateur graphique.

3. Procédé selon la revendication 1 ou 2, dans lequel, lorsqu'un attribut du paramètre sélectionné comprend une couleur, le procédé comprend en outre les étapes consistant à :
communiquer la couleur du paramètre sélectionné au stylet (100) ; et
afficher la couleur du paramètre sélectionné en utilisant un indicateur de couleur du stylet (100).

4. Procédé selon l'une des revendications 1 à 3, comprenant en outre les étapes consistant à :
former une pluralité de deuxièmes paramètres en réponse à des deuxièmes entrées à partir de l'interface utilisateur graphique du dispositif électronique hôte, chaque deuxième paramètre comprenant une pluralité de deuxièmes attributs sélectionnés par l'utilisateur de l'outil de dessin informatisé, où les deuxièmes attributs pouvant être sélectionnés par l'utilisateur sont sélectionnés dans le groupe d'attributs ;
stocker les deuxièmes paramètres dans la mémoire du dispositif électronique hôte ; et
recevoir un deuxième signal au niveau du dispositif électronique hôte à partir du stylet, chaque deuxième signal étant généré en réponse à une pression d'un deuxième bouton du stylet ;
à chaque fois que le deuxième signal est reçu par le dispositif électronique hôte à partir du stylet, passer à un paramètre suivant de la pluralité de deuxièmes paramètres de l'outil de dessin informatisé pour sélectionner un paramètre de la pluralité de deuxièmes paramètres, où les deuxièmes paramètres sont accessibles de manière cyclique ; et
combiner des attributs du paramètre sélectionné de la pluralité de premiers paramètres et des attributs du paramètre sélectionné de la pluralité de deuxièmes paramètres afin de définir des paramètres de l'outil de dessin informatisé.

5. Procédé selon l'une des revendications 1 à 3, comprenant en outre au moins l'une des étapes consistant à :
afficher une ligne sur l'interface utilisateur graphique du dispositif électronique hôte en fonction de la position du stylet (100) et du premier paramètre sélectionné de l'outil de dessin informatique ; et
transmettre les premiers paramètres au stylet (100) et stocker les premiers paramètres dans une mémoire du stylet (100).

6. Support lisible par ordinateur portant des instructions lisibles par ordinateur, conçues, lorsqu'elles sont exécutées par un processeur, pour amener un dispositif électronique (200) à effectuer le procédé de l'une des revendications 1 à 5.

7. Système de dessin informatique configuré pour permettre la sélection d'attributs d'un outil de dessin informatisé, le système comprenant un stylet et un dispositif électronique hôte ; dans lequel le dispositif électronique hôte comprend :
un écran d'affichage comprenant une interface utilisateur graphique ;
un processeur configuré pour former une pluralité de premiers paramètres en réponse à des entrées à partir de l'interface utilisateur graphique, chaque premier paramètre comprenant une pluralité de premiers attributs sélectionnés par l'utilisateur de l'outil de dessin informatisé, où les premiers attributs pouvant être sélectionnés par l'utilisateur sont sélectionnés dans un groupe d'attributs comprenant la couleur, la largeur de ligne, le type d'outil de dessin, l'opacité, le grain, l'angle, la gigue, la saturation, le fond perdu, l'écoulement et la profondeur ;
une mémoire stockant les premiers paramètres ;
le processeur étant en outre configuré pour :
recevoir un premier signal de sélection (120) à partir d'un stylet (100), chaque premier signal de sélection étant généré en réponse à une pression d'un premier bouton du stylet ;
à chaque fois que le premier signal est reçu par le dispositif électronique hôte à partir du stylet, passer à un paramètre suivant de la pluralité de premiers paramètres de l'outil de dessin informatisé pour sélectionner un paramètre de la pluralité de premiers paramètres, où les premiers paramètres sont accessibles de manière cyclique ; et
attribuer la pluralité de premiers attributs d'outil de dessin sélectionnés par l'utilisateur pour le paramètre sélectionné à l'outil de dessin informatisé.

8. Système de dessin informatique selon la revendication 7, dans lequel le processeur est en outre configuré pour :
afficher une ligne sur l'interface utilisateur graphique du dispositif électronique hôte en fonction de la position du stylet et du premier paramètre sélectionné de l'outil de dessin informatique, et facultativement,
afficher sur l'interface utilisateur graphique le premier paramètre sélectionné.

9. Système de dessin informatique selon la revendication 7 ou 8, dans lequel le stylet comprend en outre :
un boîtier (104) ;
une pointe à dessiner (102) s'étendant à partir d'une extrémité du boîtier (104) ;
une unité de communication (112) dans le boîtier (104) ; et
le premier bouton ayant pour fonction d'amener l'unité de communication (112) à transmettre le premier signal de sélection (120) lors de l'activation du premier bouton.

10. Système de dessin informatique selon la revendication 9, dans lequel le stylet comprend en outre un indicateur de couleur ayant pour fonction, lorsqu'un attribut du premier paramètre sélectionné comprend une couleur, d'afficher la couleur du premier paramètre sélectionné,
dans lequel le dispositif électronique hôte (200) comprend en outre facultativement une unité de communication (208) ayant pour fonction de recevoir le premier signal de sélection (120) à partir du stylet (100) et ayant pour fonction de transmettre la couleur du paramètre primaire sélectionné au stylet (100).

11. Système de dessin informatique selon la revendication 9, dans lequel le stylet comprend en outre :
un deuxième bouton (108) ayant pour fonction d'amener l'unité de communication (112) à transmettre un deuxième signal de sélection (120) lors de l'activation du deuxième bouton (108),
dans lequel le processeur est en outre conçu pour, à chaque fois que le deuxième signal de sélection est reçu par le dispositif électronique hôte à partir du stylet,
passer à un paramètre suivant d'une pluralité de deuxièmes paramètres de l'outil de dessin informatisé pour sélectionner un paramètre de la pluralité de deuxièmes paramètres, où les deuxièmes paramètres sont accessibles de manière cyclique, les deuxièmes paramètres étant formés en réponse à des deuxièmes entrées à partir de l'interface utilisateur graphique, chaque deuxième paramètre comprenant une pluralité de deuxièmes attributs pouvant être sélectionnés par l'utilisateur sélectionnés dans le groupe d'attributs, et
combiner des attributs du paramètre sélectionné de la pluralité de premiers paramètres et des attributs du paramètre sélectionné de la pluralité de deuxièmes paramètres afin de définir des paramètres de l'outil de dessin informatisé.
